# FASCICULE DE BREVET EUROPEEN

(11) **EP 2 649 285 B1**
(45) Date de publication et mention de la délivrance du brevet: **20.02.2019**
(21) Numéro de dépôt: 11791289.9
(22) Date de dépôt: 06.12.2011
(51) Int. Cl.: F02C 1/05, F01D 15/10, F01D 1/02, F01D 17/18, F01K 21/04

(54) **CIRCUIT D'ALIMENTATION EN VAPEUR D'UNE TURBINE**
DAMPFLEITUNGSSYSTEM ZUR VERSORGUNG VON EINER TURBINE
STEAM DUCTS FOR FEEDING A TURBINE

(30) Priorité: 10.12.2010 FR 1060338
(43) Date de publication de la demande: 16.10.2013
(73) Titulaire: General Electric Technology GmbH, 5400 Baden (CH)
(72) Inventeur: JOURDAIN, Vincent, 75018 Paris (FR); VIOLA, Bernard, 91280 Saint-Pierre-du-Perray (FR); MILET, Damien, 75014 Paris (FR)
(74) Mandataire: General Electric Technology GmbH
(86) Numéro de dépôt international: PCT/EP2011/071866
(87) Numéro de publication internationale: WO 2012/076501

(56) Documents cités:
- EP-A1- 1 719 890
- WO-A1-89/03471
- DE-A1-102008 062 588
- FR-A1- 2 551 181
- US-A- 4 053 745
- US-A- 4 178 763
- US-A1- 2002 020 166
- US-B1- 6 668 537

## Description

### DOMAINE TECHNIQUE DE L'INVENTION

Le domaine technique de l'invention est celui des turbines entrainant un alternateur et comportant un circuit d'alimentation en vapeur. La source de chaleur d'un générateur de vapeur peut être indépendamment nucléaire ou fossile.

### ETAT DE LA TECHNIQUE ANTERIEURE

La problématique de l'alimentation en vapeur d'une turbine entrainant un alternateur à partir d'un ensemble fonctionnel de générateurs de vapeur mis en parallèle, chacun délivrant de la vapeur essentiellement à la même pression, , connaît déjà plusieurs dispositifs, notamment celui de la mise en place d'un collecteur entre les diverses lignes principales de vapeur et les lignes d'admission de vapeur à la turbine. Ce collecteur permet de collecter la totalité de la vapeur fournie par l'ensemble fonctionnel de générateurs de vapeur et de la distribuer à première roue de la turbine à vapeur au travers d'un ensemble de lignes d'admission de vapeur, chacune pourvue d'un moyen de réglage.

En effet, une installation de production d'électricité comporte une turbine alimentée en vapeur par un ou des générateur(s) de vapeur. On définira par la suite les lignes principales de vapeur comme étant les lignes au départ du ou des générateur(s) de vapeur vers la turbine et les lignes d'admission comme étant les lignes convoyant la vapeur depuis ces lignes de vapeur principales aux orifices d'admission de la turbine et comportant les organes d'admission de la turbine, la jonction entre les lignes se faisant en général par un collecteur. Notons que la présence de plusieurs lignes trouve sa justification soit dans le nombre de générateurs de vapeur mis en parallèle, soit dans des impératifs technologiques de dimensionnement (vitesse maximum : diamètre maximum, etc.) mais pas dans le fait que des niveaux de pression de vapeur différents sont considérés. Le collecteur permet d'équilibrer les niveaux de pression des générateurs de vapeur qui opèrent en parallèle, et de fournir une source stable pour les divers utilisateurs de vapeur de la centrale.

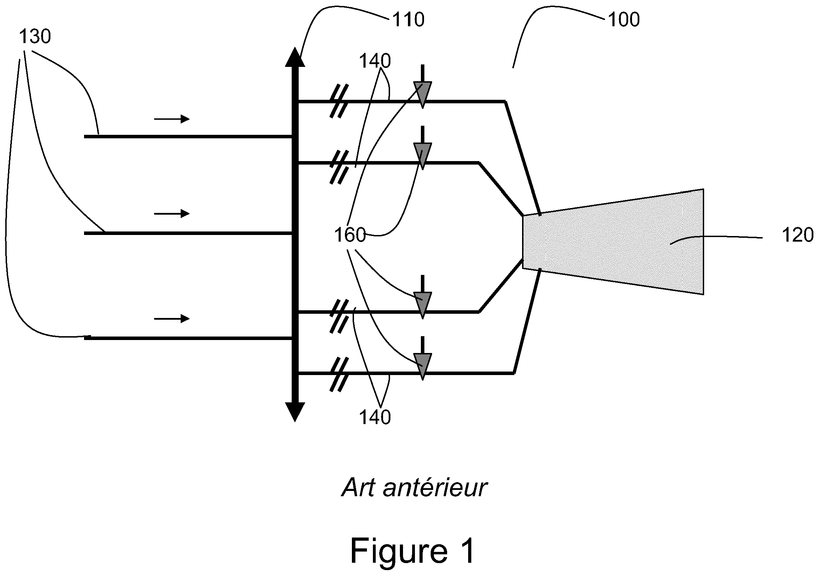

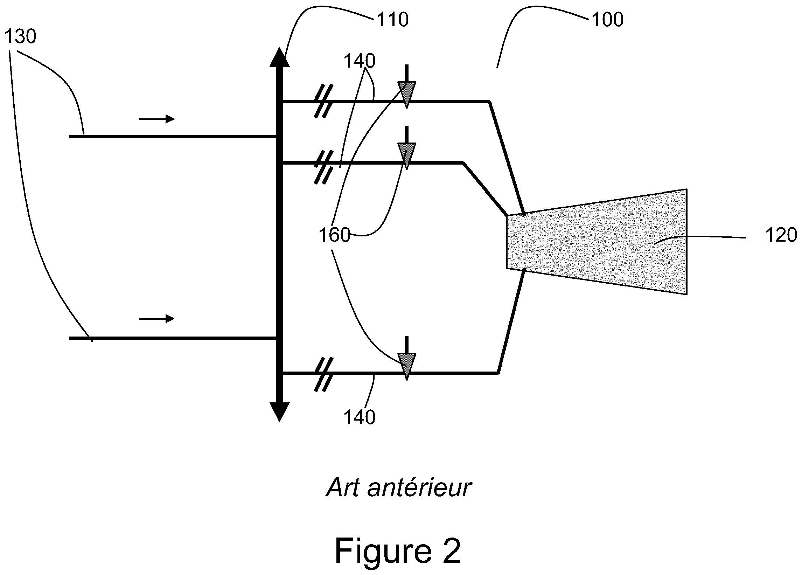

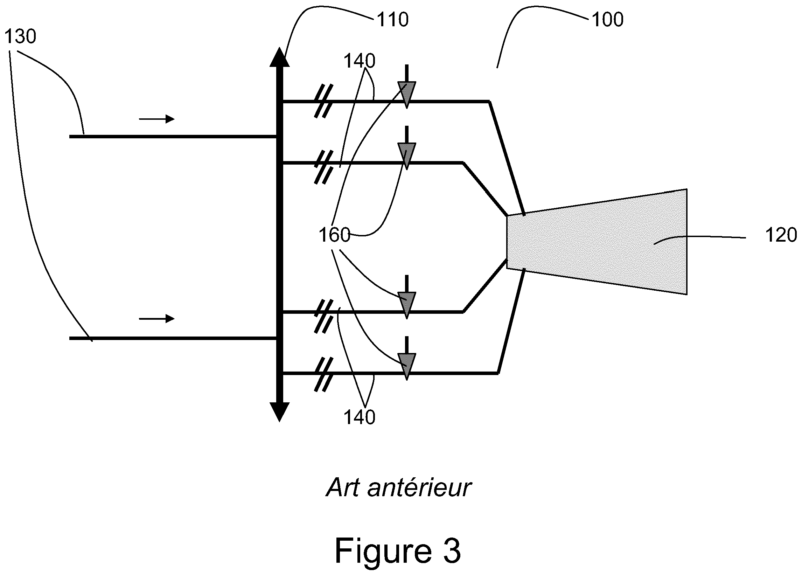

Ainsi, dans des configurations connues, dont plusieurs variantes connues sont représentées sur les figures 1, 2 et 3, des lignes principales de vapeur 130 alimentent des lignes d'admission 140 de vapeur à la turbine 120 par l'intermédiaire d'un collecteur 110 placé souvent orthogonalement aux lignes respectivement de vapeur principales 130 et d'admission 140. Les lignes principales de vapeur 130 sont situées en amont du collecteur 110 tandis que les lignes d'admission 140 de vapeur à la turbine 120 sont situées en aval dudit collecteur 110.

Des tels dispositifs ont notamment l'inconvénient d'entraîner des pertes de charges importantes. En effet, dans ce type de dispositif, le fluide en circulant dans les lignes et passant par un collecteur est soumis à des frottements plus importants du fait d'un circuit d'alimentation plus long et comportant de nombreux changements de direction et singularités. Les pertes de charges se traduisent par une dégradation du rendement de l'installation et au final par une réduction de la puissance électrique disponible.

Il est connu dans l'état de la technique, par exemple par le document US 6668537 B1, qui montre les caractéristiques techniques du préambule de la revendication indépendante 1, un système de récupération de chaleur de gaz d'échappement chaud dans une turbine, comprenant des lignes principales de vapeur et des lignes d'admission de vapeur. Il est aussi connu dans l'état de la technique, par le document US 200/0020166 A1, un système de contrôle et un procédé de commande pour contrôler de manière stable une servovalve, faisant le contrôle d'une pluralité de bobines d'asservissement qui sont détectés par des moyens de rupture de fil fourni individuellement à des amplificateurs d'asservissement détection.

### EXPOSE DE L'INVENTION

L'invention vise à remédier aux inconvénients de l'état de la technique, en particulier au problème de circulation de vapeur pour l'alimentation d'une turbine entrainant un alternateur. Elle vise notamment à proposer un circuit d'alimentation en vapeur optimisé entre un ensemble fonctionnel de générateurs de vapeur d'une part et d'une turbine entrainant un alternateur d'autre part permettant d'augmenter le rendement d'une telle turbine. La source de chaleur de l'ensemble fonctionnel de générateur de vapeur peut être indépendamment nucléaire ou fossile.

Pour ce faire est proposé selon un premier aspect un circuit d'alimentation en vapeur d'une turbine, comportant *n* lignes principales de vapeur et *n*' lignes d'admission de vapeur à la turbine, le nombre *n*' de lignes d'admission de vapeur à la turbine étant strictement supérieur au nombre *n* de lignes principales de vapeur, caractérisé en ce qu'il comporte, d'une part, *n* lignes d'admission directes de vapeur à la turbine reliant les *n* liaisons des lignes principales de vapeur directement aux lignes d'admission de vapeur à la turbine et, d'autre part *n'-n* lignes d'admission non liées directement aux lignes principales de vapeur, définissant ainsi les lignes d'admission directes et alimentées indirectement par au moins, une des *n* lignes d'admission indirectes au moyen d'au moins une ligne dérivée de vapeur, par un piquage sur la ligne d'admission directe. Il est à noter que le nombre *n* de lignes principales de vapeur et le nombre *n*' de lignes d'admission de vapeur sont des caractéristiques de l'installation, déterminées en particulier par la configuration de l'ensemble fonctionnel de générateurs de vapeur et par le nombre de soupapes d'admission de la turbine considérée. Dans cette description, une ligne d'admission est dite « directe » si la vapeur la traversant peut être liée à une ligne d'admission de vapeur particulière, c'est à dire qu'elle n'est pas le résultat d'un mélange entre de la vapeur provenant de plusieurs lignes principales de vapeur. Réciproquement, si une ligne d'admission reçoit un mélange de vapeur en provenance de plusieurs lignes principales de vapeurs, elle est dite « indirecte ».

Le nombre *n'* de lignes d'admission de vapeur à la turbine étant strictement supérieur au nombre *n* de lignes principales de vapeur, et le dispositif comportant au moins autant de lignes d'admission directes de vapeur à la turbine que de lignes principales de vapeur, c'est-à-dire *n* lignes d'admission directes, il en résulte un nombre *n'-n,* strictement positif, de lignes d'admission non liées directement aux lignes principales de vapeur, appelées les lignes d'admission indirectes.

Ces lignes d'admission indirectes sont alimentées indirectement par au moins une des *n* lignes d'admission directes au moyen d'au moins une ligne dérivée de vapeur par un piquage sur ladite ligne d'admission directe. Ce piquage permet de s'affranchir de l'utilisation d'un collecteur principal et d'optimiser les pertes de charge.

Ces piquages sont des singularités entraînant des pertes de charges, néanmoins ces pertes n'affectent qu'une fraction du débit d'admission et ont un impact moindre comparativement à l'utilisation d'un collecteur principal qui alimenterait toutes les lignes d'admission. De plus, la ligne d'admission indirecte alimentée par la ligne dérivée sera utilement choisie et configurée pour atténuer l'augmentation des pertes de charges

Selon une caractéristique particulière une ligne principale de vapeur est liée directement à un générateur de vapeur. Une ligne principale de vapeur convoie ainsi de la vapeur vive. Selon une caractéristique particulière une ligne d'admission de vapeur est liée directement au premier étage de la turbine

En d'autres termes, selon une première caractéristique, le circuit d'alimentation en vapeur d'une turbine entrainant un alternateur, comporte au moins autant de lignes d'admission directes de vapeur à la turbine que de lignes principales de vapeur.

L'avantage de cette configuration est de s'affranchir au moins en partie du collecteur, de réduire les coudes associés et de diminuer les pertes de pression par frottement et les pertes de charges. Dans une application pratique, la diminution de la perte de charge moyenne effective calculée correspond à une augmentation du rendement de l'installation de 0.1%, ce qui est significatif.

En outre, de façon avantageuse, au moins une ligne dérivée de vapeur est reliée à au moins une ligne d'alimentation permettant l'alimentation en vapeur d'un dispositif autre que la turbine, que cet usage soit permanent ou intermittent. Ces autres utilisateurs peuvent être, par exemple, des contournements de la turbine, des surchauffeurs à vapeur ou divers auxiliaires. Pour certains de ces utilisateurs, les pertes de charges supplémentaires n'ont aucun impact sur les performances de l'installation.

Selon un mode de réalisation préféré de l'invention, *n* est compris entre 2 et 6, et n'est compris entre 3 et 8.

En particulier, 2 modes de réalisation de l'invention apparaissent avantageux :
- *n'=n+1* : avantageusement dans cette configuration particulière, la ligne d'admission indirecte est alimentée par exactement n lignes dérivées de vapeur en piquage sur les n lignes respectives d'admission directes de vapeur à la turbine.
- *n'=n+2* : avantageusement dans cette configuration particulière, chacune des deux lignes d'admission indirectes est alimentée par des lignes dérivées de vapeur en piquage sur tout ou partie des n lignes respectives d'admission directes de vapeur à la turbine.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma d'un circuit d'alimentation en vapeur d'une turbine selon un mode de réalisation connu de l'art antérieur avec *n'=n+1=4 ;*
- la figure 2, un schéma d'un circuit d'alimentation en vapeur d'une turbine selon un mode de réalisation connu de l'art antérieur avec *n'=n+1=3 ;*
- la figure 3, un schéma d'un circuit d'alimentation en vapeur d'une turbine selon un mode de réalisation connu de l'art antérieur avec *n'=n+2=4 ;*
- la figure 4, un schéma d'un circuit d'alimentation en vapeur d'une turbine selon un mode de réalisation ici proposé avec *n'=n+1=4 ;*
- la figure 5, un schéma d'un circuit d'alimentation en vapeur d'une turbine selon un mode de réalisation ici proposé avec *n'=n+1=3 ;*
- la figure 6, un schéma d'un circuit d'alimentation en vapeur d'une turbine selon un mode de réalisation ici proposé avec *n'=n+2=4 ;*
- la figure 7, un schéma général d'un cycle de vapeur dans une installation de production d'électricité comprenant une turbine alimentée en vapeur depuis un générateur de vapeur par un circuit d'alimentation selon un mode de réalisation.

Pour plus de clarté, les éléments identiques ou similaires sont repérés par des signes de référence identiques sur l'ensemble des figures.

### DESCRIPTION DETAILLEE D'UN MODE DE REALISATION

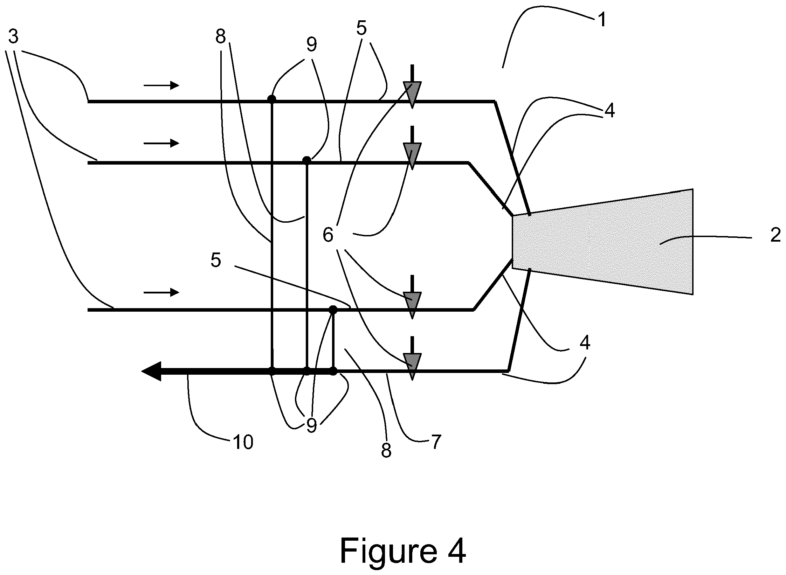

La figure 4 montre un schéma d'un circuit d'alimentation 1 en vapeur d'une turbine 2 entrainant un alternateur selon un mode de réalisation avec *n'=n+1=4.* En outre, la source de chaleur de l'ensemble fonctionnel des générateurs de vapeur alimentant la turbine 2 en question est ici de source nucléaire. En effet, dans ce mode de réalisation de l'invention le nombre *n'* de lignes d'admission de vapeur 4 à la turbine 2 est égal à quatre et le nombre *n* de lignes principales de vapeur 3 est égal à trois. Plus précisément, les trois lignes principales de vapeur 3 sont reliées directement à trois des quatre lignes d'admission 4. Le circuit d'alimentation 1 en vapeur à la turbine 2 comporte donc trois lignes d'admission directes 5.

La ligne d'admission non reliée directement à une ligne principale de vapeur 3 est reliée indirectement auxdites lignes principales de vapeur 3 par l'intermédiaire de trois lignes dérivées de vapeur 8, chacune en piquage 9 sur une de ces trois lignes d'admission directes 5, cette ligne est la ligne d'admission indirecte 7 alimentée par lesdites trois lignes directes 5.

Une ligne d'alimentation 10 dirigée vers d'autres utilisateurs en vapeur est piquée également sur la ligne d'admission indirecte 7.

Pour plus de clarté des figures, les flèches fines et parallèles aux lignes de circulation de la vapeur indiquent le sens de circulation de la vapeur dans lesdites lignes.

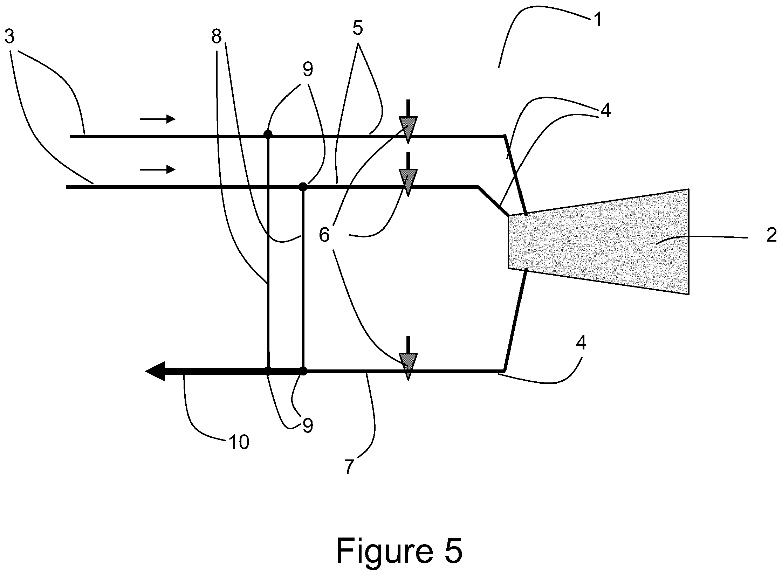

La figure 5 montre un schéma d'un circuit d'alimentation 1 en vapeur d'une turbine 2 entrainant un alternateur selon un mode de réalisation de l'invention avec *n'*=*n*+*1*=*3.* En effet, dans le mode de réalisation de l'invention le nombre n'de lignes d'admission 4 de vapeur à la turbine 2 est égal à trois et le nombre *n* de lignes principales de vapeur 3 est égal à deux. Dans cette configuration dans laquelle *n'+n*+*1,* les caractéristiques sont similaires au cas *n'*=*n*+*1*=*4* (figure 4).

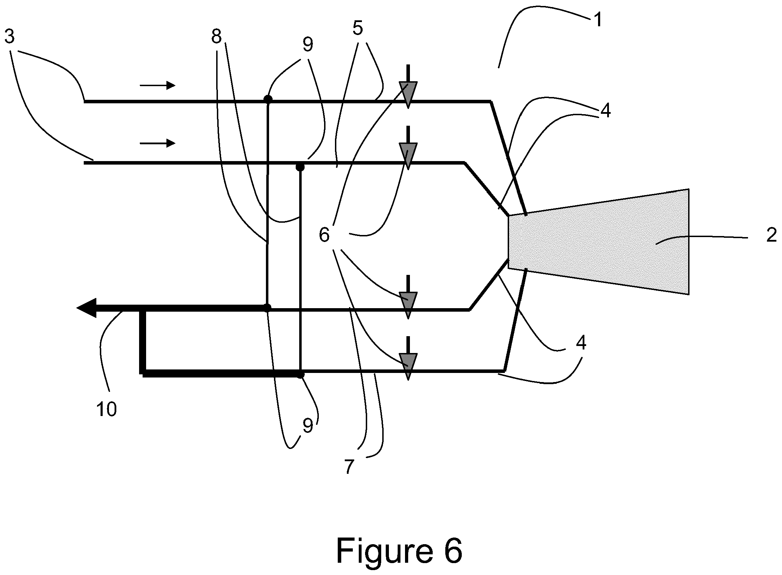

La figure 6, montre un schéma d'un circuit d'alimentation 1 en vapeur d'une turbine 2 entrainant un alternateur selon un mode de réalisation avec *n'*=*n*+*2*=*4.* En outre, la source de chaleur de l'ensemble fonctionnel des générateurs de vapeur alimentant la turbine 2 en question est ici de source fossile. Ainsi, dans ce mode de réalisation, le nombre *n'* de lignes d'admission 4 de vapeur à la turbine est égal à quatre et le nombre *n* de lignes principales de vapeur 3 est égal à deux. Dans cette configuration on a toujours autant de lignes d'admission directes 5 de vapeur à la turbine 2 que de lignes principales de vapeur 3, c'est-à-dire deux. En outre, les deux autres lignes d'admission sont donc indirectes, appelées lignes d'admission indirectes 7, et alimentées par piquage 9 sur une ligne d'admission directe 5 au moyen d'une ligne dérivée 8 de vapeur. Ces deux lignes d'admission indirectes comportent également chacun une ligne d'alimentation dirigée vers d'autres utilisateurs.

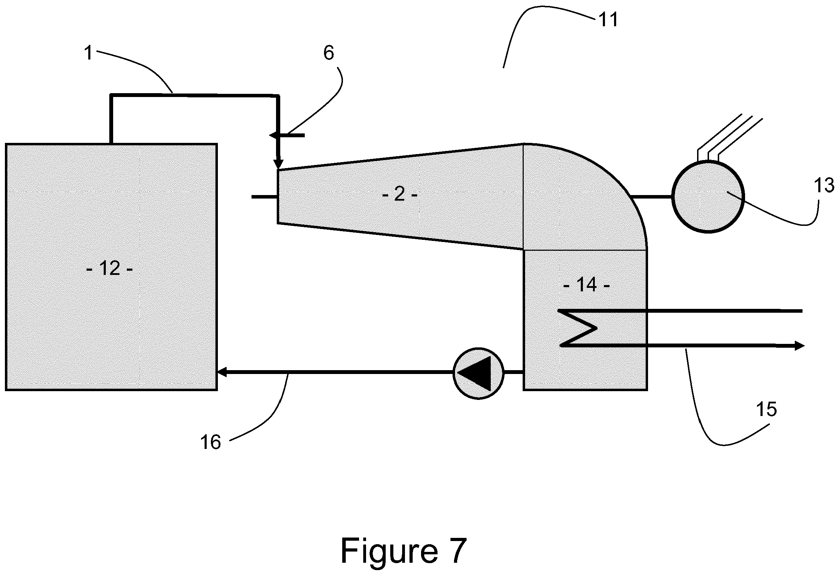

La figure 7 montre un schéma général d'un cycle de vapeur 11 dans une installation de production d'électricité comprenant une turbine 2 alimentée en vapeur depuis un générateur de vapeur 12 par un circuit d'alimentation 1 selon un mode de réalisation. Plus précisément, un générateur de vapeur 12 délivre de la vapeur haute pression à une turbine 2 par l'intermédiaire d'un circuit d'alimentation 1 en vapeur principale, le flux de vapeur d'admission à la turbine 2 étant régulé par l'intermédiaire de soupapes 6 d'admission. La vapeur sous pression parcourant la turbine 2, entraine un alternateur 13 apte à produire de l'électricité. En sortie de la turbine 2, la vapeur détendue est condensée dans un condenseur 14 couplé à un dissipateur thermique 15. Une ou plusieurs pompes alimentent le générateur de vapeur 12 en eau condensée extraite du condenseur 14 au travers des conduites 16, ces conduites 16 pouvant notamment comporter un ou plusieurs réchauffeurs et/ou dégazeurs non représentés sur cette figure.

De nombreuses modifications peuvent être apportées aux modes de réalisation décrits précédemment sans sortir du cadre de l'invention.

Ainsi, les formes générales des conduites ne sont représentées que dans un but illustratif.

En outre, l'angle des différents piquages peut ne pas être toujours à angle droit.

De plus, le nombre de lignes d'alimentation dirigées vers d'autres utilisateurs en vapeur piquées sur la ligne d'admission indirecte peut être variable.

Enfin, l'invention ne suppose pas que les débits dans chacune des soupapes de la configuration initiale soient égaux ni que les sections des tuyauteries associées soient égales.

## Revendications

1. Circuit d'alimentation (1) en vapeur d'une turbine (2), comportant *n* lignes principales de vapeur (3) en parallèle et *n'* lignes d'admission de vapeur (4) à la turbine en parallèle, le nombre *n'* de lignes d'admission de vapeur (4) à la turbine étant strictement supérieur au nombre *n* de lignes principales de vapeur (3), **caractérisé en ce qu'**il comporte
- *n* lignes d'admission directes (5) de vapeur à la turbine reliant les lignes principales de vapeur (3) directement aux lignes d'admission de vapeur (4) à la turbine.
- *n'-n* lignes d'admission non liées directement aux lignes principales de vapeur (3), définissant ainsi les lignes d'admission indirectes (7) et alimentées indirectement par au moins une des *n* lignes d'admission directe (5) au moyen d'au moins une ligne dérivée (8) de vapeur, par un piquage (9) sur ladite ligne d'admission directe (5).

2. Circuit d'alimentation en vapeur d'une turbine selon la revendication 1, **caractérisé en ce que** les *n* lignes principales de vapeur (3) sont liées directement à un générateur de vapeur

3. Circuit d'alimentation en vapeur d'une turbine selon la revendication 1, **caractérisé en ce que** les *n*' lignes d'admission de vapeur (4) sont liées directement au premier étage de la turbine

4. Circuit d'alimentation en vapeur d'une turbine selon l'une des revendications précédentes, **caractérisé en ce qu'**au moins une ligne dérivée (8) de vapeur est reliée à au moins une ligne d'alimentation (10) permettant l'alimentation en vapeur d'un dispositif autre que la turbine.

5. Circuit d'alimentation en vapeur d'une turbine selon l'une quelconque des revendications 1 à 4, **caractérisé en ce que** *n* est compris entre 2 et 6 et/ou *n'* est compris entre 3 et 8

6. Circuit d'alimentation en vapeur d'une turbine selon l'une quelconque des revendications 1 à 5 **caractérisé en ce que** *n'*=*n*+*1.*

7. Circuit d'alimentation en vapeur d'une turbine selon l'une quelconque des revendications 4 à 6, **caractérisé en ce que** la ligne d'admission indirecte (7) est alimentée par *n* lignes dérivées (8) de vapeur en piquage sur les *n* lignes respectives d'admission directes (5) de vapeur à la turbine.

8. Circuit d'alimentation en vapeur d'une turbine selon l'une quelconque des revendications 1 à 7, **caractérisé en ce que** *n'*=*n*+*2*.

9. Ensemble comprenant une turbine alimentée en vapeur depuis un ou des générateur(s) de vapeur par le circuit (1) selon l'une des revendications précédentes.

## Patentansprüche

1. Dampfversorgungsschaltung (1) einer Turbine (2), die *n* parallele Hauptdampfleitungen (3) und *n*' parallele Dampfeinlassleitungen (4) zur Turbine aufweist, wobei die Anzahl *n*' der Dampfeinlassleitungen (4) zur Turbine strikt höher ist als die Anzahl *n* der Hauptdampfleitungen (3), **dadurch gekennzeichnet, dass** es Folgendes aufweist
- *n* direkte Dampfeinlassleitungen (5) zur Turbine, welche die Hauptdampfleitungen (3) direkt mit den Dampfeinlassleitungen (4) zur Turbine verbindet.
- *n'*-*n* Einlassleitungen, die nicht direkt mit den Hauptdampfleitungen (3) verbunden sind, wodurch die indirekten Einlassleitungen (7) definiert werden und indirekt von mindestens einer der *n* direkten Einlassleitungen (5) mittels mindestens einer abgeleiteten Dampfleitung (8) durch eine Abzweigung (9) an der direkten Einlassleitung (5) versorgt werden.

2. Dampfversorgungsschaltung einer Turbine nach Anspruch 1, **dadurch gekennzeichnet, dass** die *n* Hauptdampfleitungen (3) direkt mit einem Dampferzeuger verbunden sind.

3. Dampfversorgungsschaltung einer Turbine nach Anspruch 1, **dadurch gekennzeichnet, dass** die *n*' Dampfeinlassleitungen (4) direkt mit der ersten Stufe der Turbine verbunden sind.

4. Dampfversorgungsschaltung einer Turbine nach einem der vorstehenden Ansprüche, **dadurch gekennzeichnet, dass** mindestens eine abgeleitete Dampfleitung (8) mit mindestens einer Versorgungsleitung (10) verbunden ist, um Dampfversorgung an eine andere Vorrichtung als die Turbine zu ermöglichen.

5. Dampfversorgungsschaltung einer Turbine nach einem der Ansprüche 1 bis 4, **dadurch gekennzeichnet, dass** *n* zwischen 2 und 6 und/oder *n'* zwischen 3 und 8 liegt.

6. Dampfversorgungsschaltung einer Turbine nach einem der Ansprüche 1 bis 5 **dadurch gekennzeichnet, dass** *n'*=*n*+*1.*

7. Dampfversorgungsschaltung einer Turbine nach einem der Ansprüche 4 bis 6, **dadurch gekennzeichnet, dass** die indirekte Einlassleitung (7) von *n* abgeleiteten Dampfabzweigungsleitungen (8) auf den jeweiligen *n* direkten Einlassleitungen (5) von Dampf zur Turbine versorgt wird.

8. Dampfversorgungsschaltung einer Turbine nach einem der Ansprüche 1 bis 7, **dadurch gekennzeichnet, dass** *n'*=*n*+*2.*

9. Anordnung, umfassend eine Turbine, die mit Dampf von einem oder mehreren Dampfgeneratoren durch die Schaltung (1) nach einem der vorstehenden Ansprüche versorgt wird.

## Claims

1. Steam feed circuit (1) of a turbine (2) having *n* main steam lines (3) in parallel and *n*' steam admission lines (4) to the turbine in parallel, the number *n*' of steam admission lines (4) to the turbine being strictly greater than the number *n* of main steam lines (3), **characterised in that** it has
- *n* direct steam admission lines (5) to the turbine linking the main steam lines (3) directly to the steam admission lines (4) to the turbine,
- *n'*-*n* admission lines not linked directly to the main steam lines (3), thereby defining the indirect admission lines (7), and supplied indirectly by at least one of the *n* direct admission lines (5) by means of at least one diverted steam line (8) branch connected (9) to said direct admission line (5).

2. Steam feed circuit of a turbine according to claim 1, **characterised in that** the *n* main steam lines (3) are linked directly to a steam generator.

3. Steam feed circuit of a turbine according to claim 1, **characterised in that** the *n'* steam admission lines (4) are linked directly to the first stage of the turbine.

4. Steam feed circuit of a turbine according to any of the preceding claims, **characterised in that** at least one diverted steam line (8) is connected to at least one feed line (10) enabling a device other than the turbine to be supplied with steam.

5. Steam feed circuit of a turbine according to any of claims 1 to 4, **characterised in that** *n* is comprised between 2 and 6 and/or *n*' is comprised between 3 and 8.

6. Steam feed circuit of a turbine according to any of claims 1 to 5, **characterised in that** *n'=n+1.*

7. Steam feed circuit of a turbine according to any of claims 4 to 6, **characterised in that** the indirect admission line (7) is supplied by *n* diverted steam lines (8) branch connected to the *n* respective direct steam admission lines (5) to the turbine.

8. Steam feed circuit of a turbine according to any of claims 1 to 7, **characterised in that** *n'=n+2.*

9. Assembly comprising a turbine supplied with steam from one or more steam generator(s) via the circuit (1) according to any of the preceding claims.
